# EUROPÄISCHE PATENTSCHRIFT

(11) **EP 2 737 236 B1**
(45) Veröffentlichungstag und Bekanntmachung des Hinweises auf die Patenterteilung: **15.04.2015**
(21) Anmeldenummer: 12778247.2
(22) Anmeldetag: 20.10.2012
(51) Int. Cl.: F16K 31/06

(54) **ELEKTRISCH BETÄTIGBARES VENTIL**
ELECTRICAL ACTUATED VALVE
SOUPAPE À COMMANDE ÉLECTRIQUE

(43) Veröffentlichungstag der Anmeldung: 04.06.2014
(73) Patentinhaber: Festo AG & Co. KG, 73734 Esslingen (DE)
(72) Erfinder: STARZMANN, Ralf, 73262 Reichenbach (DE); KÜHBAUCH, Heiko, 73257 Köngen (DE)
(74) Vertreter: Patentanwälte Magenbauer & Kollegen Partnerschaft mbB
(86) Internationale Anmeldenummer: PCT/EP2012/004405
(87) Internationale Veröffentlichungsnummer: WO 2014/060009

(56) Entgegenhaltungen:
- EP-A1- 0 412 860
- EP-A1- 0 681 128
- EP-B1- 1 748 238

## Beschreibung

Die Erfindung betrifft ein elektrisch betätigbares Ventil zur Steuerung der Strömung eines fluidischen Druckmediums, mit einem relativ zu einem Ventilgehäuse des Ventils zu einer axialen Umschaltbewegung zwischen einer Schließstellung und einer Offenstellung antreibbaren Ventilglied, das in der Schließstellung mit einer Vorderseite an einem eine Kanalmündung eines ersten Ventilkanals umrahmenden ringförmigen Ventilsitz dichtend anliegt und das in der Offenstellung von dem Ventilsitz abgehoben ist, so dass der erste Ventilkanal mit einem den Ventilsitz umrahmenden, ständig.mit einem zweiten Ventilkanal kommunizierenden Ringraum verbunden ist, wobei sich das Ventilglied axial beweglich in einer von einer bezüglich des Ventilgehäuses ortsfesten Führungswand definierten Führungsausnehmung erstreckt und wobei das Ventilglied an seinem Außenumfang unter Abdichtung gleitverschieblich an der Führungswand anliegt und eine axial bewegliche Begrenzungswand einer an seiner Rückseite angeordneten Druckausgleichskammer bildet, die zumindest in der Schließstellung des Ventilgliedes durch mindestens einen Druckausgleichskanal hindurch mit dem ersten Ventilkanal kommuniziert, wobei der Querschnitt der Führungsausnehmung dem von dem Ventilsitz umschlossenen Querschnitt entspricht und das Ventilglied durch Federmittel in Richtung seiner Schließstellung vorgespannt ist.

Ein aus der EP 1 748 238 B1 bekanntes Ventil ist als elektromagnetisch betätigbares Schnellschaltventil ausgebildet und enthält ein vom Anker einer Elektromagneteinrichtung gebildetes plattenförmiges Ventilglied, das mit einem sehr kurzen Arbeitshub zwischen einer Schließstellung und einer Offenstellung umschaltbar ist. Das Ventilglied sitzt mit Spiel frei beweglich in einer von einer Führungswand umrahmten Führungsausnehmung und ist abgesehen von einem Bereich, der der von einem Ventilsitz umrahmten Kanalmündung eines ersten Ventilkanals gegenüberliegt, ständig von dem Druckmedium umspült, das sich in einem Ringraum befindet, der den Ventilsitz umrahmt und mit einem zweiten Ventilkanal kommuniziert. Auf diese Weise wird das Ventilglied rein druckabhängig in die Schließstellung umgeschaltet, so dass zum Öffnen eine die am Ventilglied herrschende Druckdifferenz überwindende Betätigungskraft aufzubringen ist, die durch die Elektromagneteinrichtung erzeugt wird. Vor allem bei hohen Fluiddrücken erfordert der Betrieb des Ventils hohe Betätigungskräfte, was einen hohen Energieverbrauch und in der Regel auch relativ große Abmessungen des Ventils zur Folge hat.

Die EP 0 681 128 A1 offenbart ein Ventil der eingangs genannten Art, dessen Ventilglied druckentlastet ist, indem es von einer Bohrung durchsetzt ist, die bewirkt, dass die einander entgegengesetzten Stirnflächen des Ventilgliedes dem gleichen Fluiddruck ausgesetzt sind. Ein Ventil mit vergleichbarem Aufbau zeigt auch die EP 0 412 860 A1.

Der Erfindung liegt die Aufgabe zu Grunde, ein kompakt bauendes und mit wenig Energiebedarf betreibbares Ventil der eingangs genannten Art zu schaffen.

Zur Lösung dieser Aufgabe ist erfindungsgemäß vorgesehen, dass das Ventilglied, in axialer Richtung betrachtet, eine längliche Außenkontur hat, wobei es über zwei gerade Längsseiten und zwei bogenförmig abgerundete Schmalseiten verfügt, und dass der Ventilsitz, in axialer Richtung betrachtet, eine längliche Gestalt hat, wobei er über zwei gerade Längsseiten und zwei bogenförmig abgerundete Schmalseiten verfügt.

Durch das abdichtende Zusammenwirken zwischen dem Ventilglied und der Führungswand wird ein der Rückseite des Ventilgliedes zugeordneter, aufgrund seiner Funktion als Druckausgleichskammer bezeichneter Bereich von der mit dem zweiten Ventilkanal kommunizierenden Ringkammer ständig abgedichtet. Andererseits ist mindestens ein Druckausgleichskanal vorhanden, der zumindest in der Schließstellung des Ventilgliedes und vorzugsweise ständig, unabhängig von der Schaltstellung des Ventilgliedes, eine Fluidverbindung zwischen der Druckausgleichskammer und dem ersten Ventilkanal herstellt, so dass an der Rückseite des Ventilgliedes der gleiche Fluiddruck herrscht wie an der Vorderseite in dem vom Ventilsitz umrahmten Bereich. Da des Weiteren zumindest im Wesentlichen die gleichen Querschnittsabmessungen für die Führungsausnehmung und den von dem Ventilsitz umrahmten Bereich gewählt sind, ist das Ventilglied, was die an ihm angreifenden Druckkräfte anbelangt, zumindest im Wesentlichen und vorzugsweise vollständig druckkraftausgeglichen. Die zusätzlich vorhandenen Federmittel benötigen daher eine nur sehr geringe Federkraft, um das Ventilglied, unabhängig von den herrschenden Druckverhältnissen, in der Schließstellung zu halten. Zum Öffnen des Ventils ist dementsprechend, wiederum unabhängig von den herrschenden Druckverhältnissen, eine nur sehr geringe Betätigungskraft aufzubringen, nämlich eine Kraft, die ausreichend ist, um die Federkraft der Federmittel zu überwinden. Somit lässt sich das Ventil unabhängig von den herrschenden Fluiddrücken sehr energieeffizient betreiben und mit kompakten Abmessungen realisieren. Das Ventilglied hat, in axialer Richtung betrachtet, eine längliche Außenkontur. Es kann beispielsweise plattenartig flach ausgebildet sein. Das Ventilglied ist so gestaltet, dass es über zwei gerade Längsseiten und zwei bogenförmig abgerundete Schmalseiten verfügt. Eine entsprechende Gestaltung gilt auch für den Ventilsitz. Auf diese Weise erhält man bei geringer Baubreite in der Offenstellung des Ventilgliedes einen sehr großen Öffnungsquerschnitt mit entsprechend großen Durchflusswerten.

Vorteilhafte Weiterbildungen der Erfindung gehen aus den Unteransprüchen hervor.

Das Ventilglied verfügt zweckmäßigerweise über einen bevorzugt aus Metall oder Kunststoffmaterial bestehenden Grundkörper, der - insbesondere an seinem Außenumfang - ein ringförmiges Dichtungsmittel trägt, das unter Abdichtung gleitverschieblich an der Führungswand anliegt. Das ringförmige Dichtungsmittel ist bevorzugt als Lippendichtring ausgebildet, der bevorzugt aus einem gleitoptimierten Material besteht.

Der Druckausgleichskanal ist zweckmäßigerweise im Ventilglied ausgebildet, was eine sehr einfache Herstellung ermöglicht. Im Ventilgehäuse erübrigt sich hierbei die Realisierung eines Druckausgleichskanals. Bevorzugt ist der Druckausgleichskanal so gestaltet, dass er das Ventilglied axial, also in der Richtung der Umschaltbewegung, durchsetzt.

Prinzipiell können mehrere funktionell parallel geschaltete Druckausgleichskanäle vorhanden sein. Mindestens ein Druckausgleichskanal und vorzugsweise der einzige vorhandene Druckausgleichskanal ist bevorzugt querschnittsmittig in dem Ventilglied ausgebildet. Auf diese Weise ergibt sich im Bereich der Vorderseite und der Rückseite des Ventilgliedes eine gleichmäßige Druckverteilung, was einem Verkippen des Ventilgliedes entgegenwirkt.

Die für die Schließstellung verantwortlichen Federmittel befinden sich zweckmäßigerweise in der Druckausgleichskammer. Sie stützen sich zweckmäßigerweise einerseits am Ventilglied und andererseits in einem bezüglich des Ventilgehäuses ortsfesten Bereich ab.

Um eine große Baulänge für die Federmittel zu ermöglichen, ist es zweckmäßig, wenn das Ventilglied im Bereich seiner Rückseite eine Aufnahmebohrung aufweist, in die die Federmittel eintauchen. Die Federmittel sind bevorzugt als Druckfedermittel ausgebildet und bestehen beispielsweise aus einer Schraubendruckfeder. In vorteilhafter Weise ist die Aufnahmebohrung Bestandteil eines Druckausgleichskanals, so dass sich eine separate Ausgestaltung einer Aufnahmebohrung zusätzlich zum Druckausgleichskanal erübrigt. Dies reduziert die Herstellungskosten.

Es ist zweckmäßig, wenn in der Schließstellung eine "weiche" Abdichtung zwischen dem Ventilglied und dem Ventilsitz vorliegt. Dies gewährleistet eine sehr hohe Abdichtqualität. In diesem Zusammenhang ist das Ventilglied in dem in der Schließstellung am Ventilsitz anliegenden Bereich mit einem aus Material aus gummielastischen Eigenschaften bestehenden, axial wirkenden Dichtmittel versehen, das sich in der Schließstellung an den Ventilsitz anlegt, wobei der Ventilsitz durchaus auch ein Stück weit in das elastische Dichtmittel eindrücken kann. Das Dichtmittel ist zweckmäßigerweise in einer in der Vorderseite des Ventilgliedes ausgebildeten, axial offenen Ringnut aufgenommen. Wenn das Ventilglied über einen Grundkörper verfügt, ist die axial offene Ringnut bevorzugt in diesem Grundkörper ausgebildet.

Das Ventilglied ist insbesondere so gestaltet, dass es sich mit demjenigen Abschnitt, der sich auf der dem Ventilsitz zugewandten Seite seines dichtend mit der Führungswand zusammenwirkenden Bereiches erstreckt, zumindest teilweise in dem um den Ventilsitz herum angeordneten Ringraum befindet, wenn es die Schließstellung einnimmt.

Das Ventilglied ist nicht nur hinsichtlich des im ersten Ventilkanal herrschenden Druckes druckkraftausgeglichen, sondern auch hinsichtlich des im zweiten Ventilkanal herrschenden Druckes. Auch dies ist eine Auswirkung der gleitverschieblichen Abdichtung zwischen dem Ventilglied und der die Führungsausnehmung umrahmenden Führungswand.

Wenn das Ventilglied mit mindestens einem gummielastischen Pufferelement ausgestattet ist, ergibt sich eine Absorption der Aufprallenergie, wenn das Ventilglied beim Umschalten in die Offenstellung an einem bezüglich des Ventilgehäuses ortsfesten Bestandteil des Ventils zur Anlage gelangt. Bei elektromagnetischer Betätigung des Ventils ist dieser Bestandteil insbesondere von einer eine Spuleneinrichtung und geeignete Flussleitmittel enthaltenden Steuereinrichtung gebildet. Beispielsweise kann das Ventilglied im Bereich seiner Rückseite über mindestens eine Aufnahmevertiefung verfügen, in die mindestens ein aus gummielastischem Material bestehendes Pufferelement eingesetzt ist, das in der Schließstellung des Ventilgliedes rückseitig über das Ventilglied hinausragt. Das mindestens eine Pufferelement kann auch die zusätzliche Aufgabe erfüllen, einen gewissen Mindestabstand des Ventilgliedes zu der Steuereinrichtung sicherzustellen, um in der Offenstellung ein Festkleben des Ventilgliedes an der Steuereinrichtung zu vermeiden.

Das Ventil ist vorzugsweise als Magnetventil ausgebildet und enthält eine Elektromagneteinrichtung zum direkten Antreiben des Ventilgliedes. Das Ventilglied ist hierbei mit einem beweglichen Ankerelement der Elektromagneteinrichtung fest verbunden und ist bevorzugt unmittelbar von einem beweglichen Ankerelement der Elektromagneteinrichtung gebildet. Die Elektromagneteinrichtung weist bevorzugt eine eine Spuleneinrichtung und zugeordnete Flussleitmittel enthaltende Steuereinrichtung auf, die zweckmäßigerweise so angeordnet ist, dass sie die Druckausgleichskammer an der dem Ventilglied axial entgegengesetzten Seite begrenzt.

Nachfolgend wird die Erfindung anhand der beiliegenden Zeichnung näher erläutert. In dieser zeigen:
- Figur 1: eine bevorzugte Ausführungsform des erfindungsgemäßen Ventils in einem Längsschnitt in der Schließstellung des Ventilgliedes,
- Figur 2: einen Querschnitt durch das Ventil gemäß Schnittlinie II-II aus Figur 1,
- Figur 3: den in Figur 1 umrahmten Ausschnitt III in einer vergrößerten Darstellung und
- Figur 4: in einer der Figur 3 entsprechenden Darstellungsweise einen Ausschnitt des Ventils in der Offenstellung des Ventilgliedes.

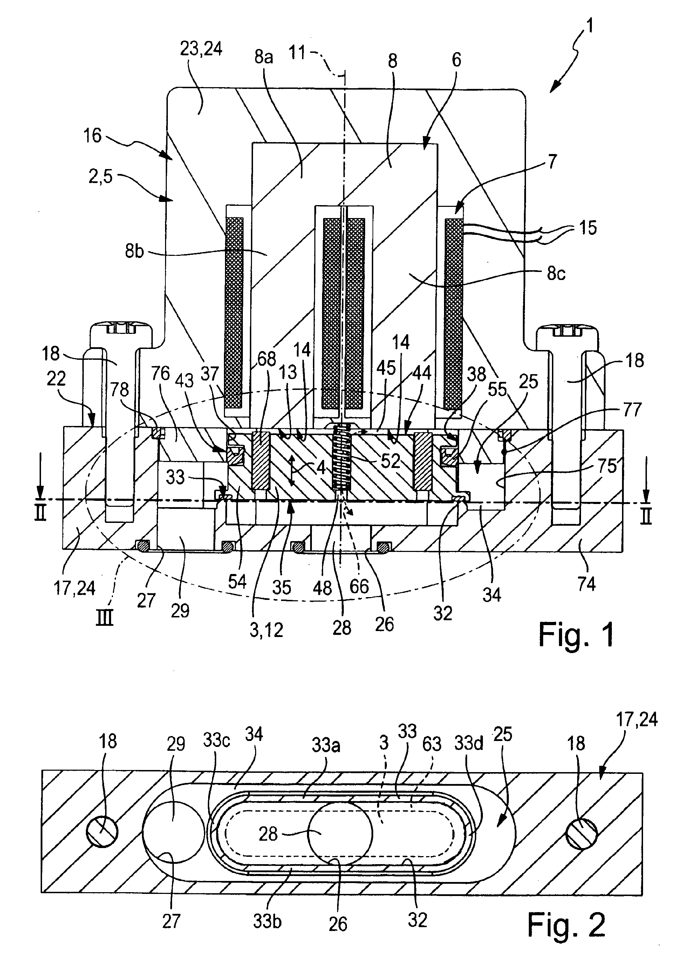

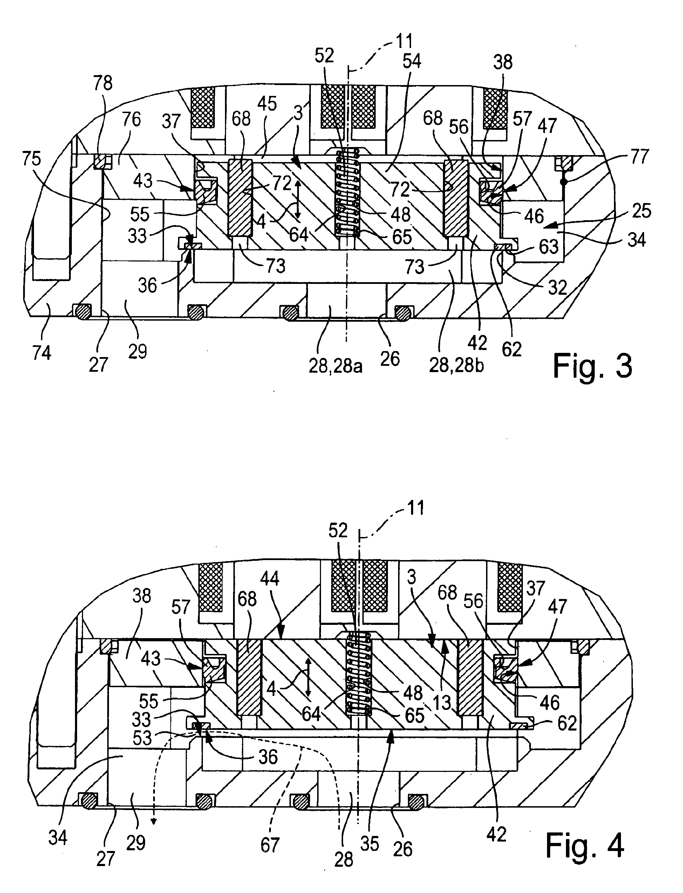

Das in seiner Gesamtheit mit Bezugsziffer 1 bezeichnete Ventil ist von elektrisch betätigbarer Bauart und enthält eine elektrische Betätigungseinrichtung 2, durch die ein bewegliches Ventilglied 3 zu einer durch einen Doppelpfeil angedeuteten linearen Umschaltbewegung 4 antreibbar ist, um es wahlweise in einer aus Figuren 1 und 3 ersichtlichen Schließstellung oder in einer aus Figur 4 ersichtlichen Offenstellung zu positionieren.

Bevorzugt handelt es sich bei der elektrischen Betätigungseinrichtung 2 um eine Elektromagneteinrichtung 5. Das Ventil 1 des Ausführungsbeispiels ist mit einer solchen Elektromagneteinrichtung 5 ausgestattet, so dass es sich um ein Magnetventil handelt. Prinzipiell kann das Ventil 1 allerdings auch mit anderen elektrisch aktivierten Betätigungsmechanismen ausgestattet sein, beispielsweise mit einer piezoelektrischen Betätigungseinrichtung.

Die elektrische Betätigungseinrichtung 2 ist insbesondere so ausgebildet, dass sie eine direkte Betätigung des Ventilgliedes 3 ermöglicht. Die zur Betätigung eingespeiste elektrische Betätigungsenergie wird also direkt in eine auf das Ventilglied 3 einwirkende Stellkraft umgewandelt, ohne dass eine elektrofluidische Energiewandlung stattfinden würde.

Bei der bevorzugten Ausgestaltung als Elektromagneteinrichtung 5 enthält die elektrische Betätigungseinrichtung 2 eine Steuereinrichtung 6, die über eine elektrisch bestrombare Spuleneinrichtung 7 und über der Spuleneinrichtung 7 zugeordnete, der Leitung magnetischen Flusses dienende Flussleitmittel 8 verfügt. Außerdem enthält die Elektromagneteinrichtung 5 ein bezüglich der Steuereinrichtung 6 bewegliches, magnetisch leitfähiges und insbesondere aus ferromagnetischem Material bestehendes Ankerelement 12. Durch Anlegen einer Spannung an die Spuleneinrichtung 7 ist die Elektromagneteinrichtung 5 aktivierbar, so dass sie ein magnetisches Feld ausbildet, das das Ankerelement 12 an eine Grundfläche 13 der Steuereinrichtung 6 heranzieht, an der eine oder mehrere Polflächen 14 der Flussleitmittel 8 angeordnet sind.

Exemplarisch bilden die Flussleitmittel 8 einen U-förmigen Magnetkern 8a aus, der über zwei Schenkelabschnitte 8b, 8c verfügt, deren Stirnflächen in einer gemeinsamen Ebene liegen und jeweils eine der beiden Polflächen 14 bilden. Die Polflächen 14 erstrecken sich rechtwinkelig zu einer strichpunktiert angedeuteten Hauptachse 11 des Ventils 1.

Die Spuleneinrichtung 7 enthält beim Ausführungsbeispiel zwei Spuleneinheiten, die jeweils einen der Schenkelabschnitte 8b, 8c umschließen. Von außen zugängliche elektrische Kontaktmittel 15 ermöglichen die elektrische Ansteuerung der Spuleneinrichtung 7.

Die Steuereinrichtung 6 ist beim Ausführungsbeispiel Bestandteil eines insgesamt mit Bezugsziffer 16 bezeichneten Steuerkopfes des Ventils 1. Dieser Steuerkopf 16 ist, mit der Grundfläche 13 voraus, an einem Gehäusehauptkörper 17 des Ventils 1 angesetzt und daran in geeigneter Weise befestigt. Bevorzugt kommt eine Schraubbefestigung zum Einsatz. Exemplarisch ist der Steuerkopf 16 mit Hilfe mehrerer Befestigungsschrauben 18 an eine Montagefläche 22 des Gehäusehauptkörpers 17 angeschraubt.

Der Gehäusehauptkörper 17 bildet zusammen mit einem die Steuereinrichtung 6 aufnehmenden Hüllkörper 23 des Steuerkopfes 16 ein Ventilgehäuse 24 des Ventils 1. In diesem Ventilgehäuse 24 befindet sich unter anderem auch das Ventilglied 3.

Im Innern des Ventilgehäuses 24 ist eine Ventilkammer 25 ausgebildet. Diese ist beim Ausführungsbeispiel teilweise von dem Gehäusehauptkörper 17 und teilweise von dem Hüllkörper 23 begrenzt. Bevorzugt ist die Ventilkammer 25 insgesamt in dem Gehäusehauptkörper 17 ausgebildet und ist zu der Montagefläche 22 hin offen, wo sie durch den sie überdeckenden Steuerkopf 16 verschlossen ist.

Das Ventilglied 3 ist in der Ventilkammer 25 in einer Weise aufgenommen, dass es in Achsrichtung der Hauptachse 11 relativ zum Ventilgehäuse 24 beweglich ist. Diese Bewegung ist die Umschaltbewegung 4. Nachfolgende Bezugnahmen auf eine "axiale Richtung" sind als Bezugnahmen auf die Achsrichtung der Hauptachse 11 zu verstehen, sofern im Einzelfall keine abweichenden Angaben gemacht werden.

Das Ventil 1 eignet sich zur Steuerung der Strömung eines fluidischen Druckmediums, wobei insbesondere an Druckluft gedacht ist. Das zu steuernde Druckmedium ist durch einen außen am Ventil 1 zugänglichen Eingang 26 in das Ventil 1 einspeisbar. Außerdem befindet sich außen am Ventil 1 ein Ausgang 27, der in der Schließstellung des Ventilgliedes 3 vom Eingang 26 abgetrennt ist und in der Offenstellung des Ventilgliedes 3 mit dem Eingang 26 in Fluidverbindung steht. Auf diese Weise hat das Ventil 1 des Ausführungsbeispiels eine 2/2-Ventilfunktion, wobei die Fluidverbindung zwischen dem Eingang 26 und dem Ausgang 27 wahlweise absperrbar oder freigebbar ist. Im freigegebenen Zustand strömt am Eingang 26 eingespeistes Druckmedium durch den Ausgang 27 hindurch wieder aus dem Ventil 1 heraus.

Der Eingang 26 gehört zu einem ersten Ventilkanal 28, der in dem Gehäusehauptkörper 17 ausgebildet ist und mit einer ersten Kanalmündung 32 in die Ventilkammer 25 einmündet. Die erste Kanalmündung 32 ist dabei axial ausgerichtet. Sie ist von einem ringförmigen Ventilsitz 33 umrahmt, der axial der Steuereinrichtung 6 zugewandt ist und sich in einer zu der Hauptachse 11 rechtwinkeligen Ebene erstreckt. Vorzugsweise ist er koaxial zu der Hauptachse 11 angeordnet.

Der Ventilsitz 33 befindet sich zweckmäßigerweise an der Stirnseite einer kragenartig ausgebildeten Erhebung, die dem Ventilglied 3 entgegenragt.

Wie insbesondere aus Figur 2 gut ersichtlich ist, hat der Ventilsitz 33 in Draufsicht, also in axialer Richtung betrachtet, bevorzugt eine längliche Gestalt. Auf diese Weise kann ein sehr schmal bauendes Ventil 1 realisiert werden, das hohe Durchflussraten ermöglicht. Exemplarisch ist der Ventilsitz 33 derart konturiert, dass er über zwei geradlinige, zueinander parallele Längsseiten 33a, 33b und über zwei diese beiden Längsseiten 33a, 33b verbindende, bogenförmig abgerundete Schmalseiten 33c, 33d verfügt.

Rings um den Ventilsitz 33 herum erstreckt sich in der Ventilkammer 25 ein Ringraum 34. Bezogen auf die Hauptachse 11 erstreckt sich der Ringraum 34 radial außerhalb des Ventilsitzes 33 um den Ventilsitz 33 herum, wobei er allerdings den Ventilsitz 33 zweckmäßigerweise auch noch axial, in Richtung zu der Steuereinrichtung 6, überragt. Dieser Ringraum 34 steht ständig mit einem zweiten Ventilkanal 29 in Fluidverbindung, der zu dem Ausgang 27 führt.

Das Ventilglied 3 ist dem Ventilsitz 33 axial in Richtung zu der Steuereinrichtung 7 vorgelagert. Es hat eine der vom Ventilsitz 33 umrahmten ersten Kanalmündung 32 zugewandte Vorderseite 35, deren Grundfläche insgesamt größer ist als die von dem Ventilsitz 33 umrahmte Fläche.

In der Schließstellung liegt das Ventilglied 3 mit einer an der Vorderseite 35 angeordneten Abdichtfläche 36 ringsum unter Abdichtung axial an dem Ventilsitz 33 an. Dadurch ist der erste Ventilkanal 28 von dem Ringraum 34 und folglich auch von dem zweiten Ventilkanal 29 fluiddicht abgetrennt.

Das Ventilglied 3 erstreckt sich axial in einer vom Ventilgehäuse 34 definierten Führungsausnehmung 37, die von einer bezüglich des Ventilgehäuses 24 ortsfesten Führungswand 38 umschlossen ist. Die Führungsausnehmung 37 ist ein Bestandteil der Ventilkammer 25 und liegt der ersten Kanalmündung 32 axial gegenüber. Sie mündet exemplarisch zu der Montagefläche 22 hin aus.

Unabhängig von seiner Schaltstellung ragt das Ventilglied 3 mit einem der Vorderseite 35 zugewandten Absperrabschnitt 42, der die Abdichtfläche 36 aufweist, aus der Führungsausnehmung 37 in Richtung zum Ventilsitz 33 heraus. Dieser Absperrabschnitt 42 ist, wie der Ventilsitz 33, von dem Ringraum 25 umrahmt.

Der sich in der Führungsausnehmung 37 erstreckende Längenabschnitt des Ventilgliedes 3 liegt an seinem rechtwinkelig zu der Hauptachse 11 orientierten Außenumfang 43 unter Abdichtung gleitverschieblich an der Führungswand 38 an. Der Dichtkontakt ist unabhängig von der Schaltstellung des Ventilgliedes 3 gegeben. Auf diese Weise ist der radial zwischen dem Ventilglied 3 und der Führungswand 38 vorhandene Zwischenraum unabhängig von der Schaltstellung des Ventilgliedes 3 stets abgedichtet. Eine sich an die der Vorderseite 35 axial entgegengesetzte Rückseite 44 des Ventilgliedes 3 anschließende Kammer, die im Folgenden auf Grund ihrer Funktion als Druckausgleichskammer 45 bezeichnet wird, ist somit zumindest in der Schließstellung des Ventilgliedes 3 von dem mit dem zweiten Ventilkanal 29 kommunizierenden Ringraum 34 fluiddicht abgetrennt.

Die Führungswand 38 definiert eine die Führungsausnehmung 37 umschließende Gleitfläche 46, an der der sich in der Führungsausnehmung 37 erstreckende Längenabschnitt des Ventilgliedes 3 mit einer Dichtfläche 47 unter Abdichtung gleitverschieblich anliegt. Die Dichtfläche 37 gleitet beim Umschalten des Ventilgliedes 3 an der Gleitfläche 46 entlang.

In der Schließstellung des Ventilgliedes 3 liegt sowohl die bezüglich der Hauptachse 11 radial orientierte Dichtfläche 47 an der Gleitfläche 46 an als auch die axial orientierte Abdichtfläche 36 an dem Ventilsitz 33. Auf diese Weise ist der Ringraum 34 in der Schließstellung des Ventilgliedes 3 sowohl vom ersten Ventilkanal 28 als auch von der Druckausgleichskammer 45 fluiddicht abgetrennt.

Das Ventilglied 3 bildet eine axial bewegliche Begrenzungswand für die sich rückseitig an sie anschließende Druckausgleichskammer 45. Allerdings ist mindestens ein Druckausgleichskanal 48 vorhanden, der zumindest in der Schließstellung des Ventilgliedes 3 eine Fluidverbindung zwischen der Druckausgleichskammer 45 und dem ersten Ventilkanal 28 herstellt. Auf diese Weise herrscht im Bereich der Vorderseite 35 und im Bereich der Rückseite 44 des Ventilgliedes 3 der gleiche Fluiddruck.

In Verbindung mit der vorgenannten Druckausgleichsmaßnahme ist ferner das Ventil 1 so ausgelegt, dass der Querschnitt der Führungsausnehmung 37 zumindest im Wesentlichen dem von dem Ventilsitz 33 umschlossenen Querschnitt des ersten Ventilkanals 28 entspricht. Dies hat zur Folge, dass zumindest in der Schließstellung des Ventilgliedes 3 zumindest im Wesentlichen gleich hohe Druckkräfte auf die Vorderseite 35 und die Rückseite 44 des Ventilgliedes 3 einwirken. Dadurch ist das Ventilglied 3 zumindest im Wesentlichen druckkraftausgeglichen.

Schließlich enthält das Ventil 1 auch noch Federmittel 52, durch die das Ventilglied 3 ständig in Richtung seiner Schließstellung vorgespannt ist. Die Federmittel 52 liefern daher im Wesentlichen die das Ventilglied 3 in der Schließstellung haltende Schließkraft. Die im Ventil 1 herrschenden Druckverhältnisse wirken sich auf die Schließkraft des Ventilgliedes 3 nicht oder nur unwesentlich aus.

Eine vorteilhafte Folge dieser Auslegung ist, dass die Schließstellung des Ventilgliedes 3 mit einer sehr geringen Federkraft aufrechterhalten werden kann und deshalb zum Umschalten des Ventilgliedes 3 in die Offenstellung eine nur geringe, von der elektrischen Betätigungseinrichtung 2 aufzubringende Betätigungskraft benötigt wird. Somit lässt sich das Ventil 1 energiesparend betreiben und die Steuereinrichtung 6 kann mit kleinen Abmessungen realisiert werden. Außerdem begünstigt dies ein hochfrequentes Umschalten des Ventilgliedes 3, so dass es in vorteilhafter Weise als sogenanntes Schnellschaltventil eingesetzt werden kann.

Wenn in der Schließstellung das Ventilglied 3 dichtend an dem Ventilsitz 33 anliegt, ergibt sich an der Rückseite 44 ein axialer Abstand zwischen dem Ventilglied 3 und der die Führungsausnehmung 37 überdeckenden Steuereinrichtung 6, der die axiale Höhe der Druckausgleichskammer 45 vorgibt. Dieser axiale Abstand definiert zugleich den Arbeitshub des Ventilgliedes 3 zwischen der Schließstellung und in der Offenstellung. In der Offenstellung ist das Ventilglied 3 durch die Betätigungskraft der elektrischen Betätigungseirichtung 2 an die Steuereinrichtung 6 herangezogen, und zwar insbesondere so weit, dass das Ventilglied 3 mit einer Rückseite 44 an der Grundfläche 13 der Steuereinrichtung 6 anliegt. Das Ventilglied 3 ist dann gleichzeitig mit seiner axial orientierten Abdichtfläche 36 von Ventilsitz 33 abgehoben, so dass sich ein aus Figur 4 ersichtlicher Überströmspalt 53 einstellt, durch den hindurch das Fluid zwischen den beiden Ventilkanälen 28, 29 und mithin zwischen dem Eingang 26 und dem Ausgang 27 überströmen kann.

Das Ventilglied 3 ist zweckmäßigerweise mehrteilig aufgebaut. Beim Ausführungsbeispiel verfügt es über einen aus einem starren Material, insbesondere aus einem weichmagnetischen Metall bestehenden Grundkörper 54, der sowohl die axiale Abdichtfläche 36 als auch die radiale Dichtfläche 47 trägt.

Die radial orientierte Dichtfläche 47 ist zweckmäßigerweise Bestandteil eines bezüglich des Grundkörpers 54 separaten Dichtungsringes 55, der in einer in den radial orientierten Außenumfang des Grundkörpers 54 eingebrachten und sich rings um den Außenumfang herum erstreckenden Ringnut 56 gehalten ist. Bei einem nicht gezeigten Ausführungsbeispiel ist der Dichtungsring 55 ein einfacher O-Ring. Bevorzugt ist der Dichtungsring 55 allerdings als Lippendichtring ausgebildet, wie dies beim Ausführungsbeispiel der Fall ist. Er verfügt hierbei über eine radial außen angeordnete Dichtlippe 57, die an der Gleitfläche 46 anliegt. Ein solcher Dichtungsring 55 zeichnet sich durch besonders gute Gleiteigenschaften aus.

Der Dichtungsring 55 kann alternativ auch fest mit dem Grundkörper 54 verbunden sein, beispielsweise mittels einer stoffschlüssigen Verbindung.

Die an der Vorderseite 35 befindliche Abdichtfläche 36 ist zweckmäßigerweise Bestandteil eines aus Material mit gummielastischen Eigenschaften bestehenden Abdichtmittels 62, das als separate Komponente an dem Grundkörper 54 des Ventilgliedes 3 im Bereich der Vorderseite 35 fixiert ist. Das Abdichtmittel 62 ist bevorzugt ringförmig gestaltet und in einer zumindest axial, zu der Vorderseite 35 hin offenen Ringnut 63 des Grundkörpers 54 aufgenommen. Die Gestaltung des Abdichtmittels 62, in Achsrichtung der Hauptachse 11 gesehen, entspricht zweckmäßigerweise derjenigen des Ventilsitzes 33, so dass es beim Ausführungsbeispiel wie der Ventilsitz 33 eine längliche Gestalt hat und über zwei geradlinige Längsseiten sowie zwei bogenförmig abgerundete Schmalseiten verfügt.

Das Abdichtmittel 62 kann alternativ auch fest mit dem Grundkörper 54 verbunden sein, beispielsweise mittels einer stoffschlüssigen Verbindung.

Mit einer solchen Gestaltung lässt sich bei geringer Baubreite ein relativ großer Öffnungsquerschnitt bei in Offenstellung befindlichem Ventilglied 3 realisieren, was hohe Durchflussraten zulässt.

Auch das Ventilglied 3 ist zweckmäßigerweise mit einer länglichen Gestalt versehen, wenn man es in Achsrichtung der Hauptachse 11 betrachtet. Es verfügt über zwei gerade Längsseiten und zwei bogenförmig abgerundete Schmalseiten, wobei es zweckmäßigerweise einen etwas größeren Umriss hat als das Abdichtmittel 62.

Der mindestens eine Druckausgleichskanal 48 ist zweckmäßigerweise ausschließlich in dem Ventilglied 3 ausgebildet. Man erspart sich dadurch eine Kanalführung im Ventilgehäuse 24, was die Herstellung vereinfacht.

Das Ventilglied 3 ist von dem mindestens einen Druckausgleichskanal 48 bevorzugt derart durchsetzt, dass der Druckausgleichskanal 48 einerseits zu der Vorderseite 35 und andererseits zu der Rückseite 44 ausmündet. Der Druckausgleichskanal 48 hat insbesondere eine geradlinige Gestalt und durchsetzt das Ventilglied 3 axial.

Beim Ausführungsbeispiel erstreckt sich der Druckausgleichskanal 48 ausschließlich im Grundkörper 54 des Ventilgliedes 3. Vorzugsweise ist der Druckausgleichskanal 48 in der Querschnittsmitte des Ventilgliedes 3 angeordnet, so dass die auf die axialen Stirnflächen des Ventilgliedes 3 einwirkenden Druckkräfte bezüglich der Hauptachse 11 symmetrisch wirken und das Ventilglied 3 nicht zum Kippen neigt.

Die Federmittel 52 sind vorzugsweise in der Druckausgleichskammer 45 angeordnet, die sie axial durchsetzen, wobei sie sich einerseits an der Steuereinrichtung 6 und andererseits an dem Ventilglied 3 abstützen. Die Federmittel 52 sind vorzugsweise als Druckfedermittel konzipiert.

Um auf einfache Weise zu ermöglichen, dass das Ventilglied 3 mit seinem Grundkörper 54 in der Offenstellung an an der Grundfläche 13 der Steuereinrichtung 6 zur Anlage gelangen kann, ist in dem Grundkörper 54 eine zu der Rückseite 44 hin offene Aufnahmebohrung 64 ausgebildet, in die die Federmittel 52 eintauchen. Die Aufnahmebohrung 64 hat im Innern an einer zu der Rückseite 44 beabstandeten Stelle eine Anschlagfläche 65, an der sich die Federmittel 52 mit ihrer einen Stirnseite abstützen können. Dadurch, dass die Federmittel 52 zumindest partiell im Innern des Grundkörpers 54 aufgenommen sind, werden sie auch am seitlichen Ausknicken gehindert.

Vorzugsweise ist die Aufnahmeborhung 64 für die Federmittel 52 von einem Druckausgleichskanal 48 gebildet, so dass auf die separate Ausgestaltung eines Druckausgleichskanals 48 und einer Aufnahmeborhung 64 verzichtet werden kann. Dies lässt sich einfach dadurch erreichen, dass der Druckausgleichskanal 48 in seinem Innern über eine die Anschlagfläche 65 bildende Abstufung verfügt. Das Druckmedium ist ohne Weiteres in der Lage, gemäß Pfeil 66 durch den Druckausgleichskanal 48 hindurch und dabei auch durch die Federmittel 52 hindurch oder an den Federmitteln 52 vorbei zwischen der Druckausgleichskammer 45 und dem der Vorderseite 35 des Ventilgliedes 3 vorgelagerten Bereich der Ventilkammer 25 überzuströmen.

Im Betrieb des Ventils 1 wird das Ventilglied 3 bei deaktivierter Elektromagneteinrichtung 5 durch die Federmittel 52 in der Schließstellung gehalten. Hierbei herrscht, auf Grund des mindestens einen Druckausgleichskanals 48, in der Druckausgleichskammer 45 der gleiche Fluiddruck wie im Bereich der ersten Kanalmündung 32 des ersten Ventilkanals 28. Da diese gleich großen Fluiddrücke an der Rückseite 44 und an der Vorderseite 35 auf zumindest im Wesentlichen gleich große Stirnflächen des Ventilgliedes 3 einwirken, ist das Ventilglied 3 hinsichtlich der Fluidkräfte zumindest im Wesentlichen druckkraftausgeglichen und wird lediglich durch die Stellkraft der Federmittel 52 in der Schließstellung gehalten. Da sich die Fluidkräfte nicht auswirken, können die Federmittel 52 mit einer sehr geringen Federkonstante ausgelegt werden, ohne das sichere Einhalten der Schließstellung zu gefährden.

Zum Öffnen des Ventils 1 wird die Elektromagneteinrichtung 5 aktiviert, so dass sich ein Magnetfeld ausbildet, durch das das als Ankerelement fungierende Ventilglied 3 an die Grundfläche 13 und insbesondere an die Polflächen 14 herangezogen wird. Somit ergibt sich durch die Ventilkammer 25 hindurch eine offene Fluidverbindung zwischen den beiden Ventilkanälen 28, 29, so dass ein am Eingang 26 eingespeistes Druckmedium gemäß Pfeil 67 zum Ausgang 27 überströmen kann.

Bei erneuter Deaktivierung der Elektromagneteinrichtung 5 wird das Ventilglied 3 durch die Kraft der Federmittel 52 wieder in die Schließstellung zurückbewegt.

Um die Intensität des Aufpralls des Ventilgliedes 3 an der Grundfläche 13 zu verringern, ist es zweckmäßig, das Ventilglied 3 mit mindestens einem gummielastischen Pufferelement 68 auszustatten. Dieses stützt sich axial einerseits am Grundkörper 54 des Ventilgliedes 3 ab und ragt andernends, in der Schließstellung des Ventilgliedes 3 betrachtet, ein Stück weit im Bereich der Rückseite 44 aus dem Grundkörper 54 heraus.

Beim Umschalten in die Offenstellung gelangt das mindestens eine Pufferelement 68 in Kontakt mit der Grundfläche 13, bevor der Grundkörper 54 daran zur Anlage gelangt. In der sich daran anschließenden letzten Phase der Hubbewegung wird das Pufferelement 68 gemäß Figur 4 axial zusammengedrückt, so dass die Aufprallenergie absorbiert wird.

Je nach Betätigungskraft der Elektromagneteinrichtung 5 kann die Offenstellung des Ventilgliedes 3 eine unterschiedliche Relativposition zwischen dem Ventilglied 3 und der Grundfläche 13 sein. Bei hoher Anzugskraft bleibt der Grundkörper 54 während der Dauer der Offenstellung in Anlage an der Grundfläche 13, wobei das mindestens eine Pufferelement 68 weitestmöglich axial zusammengedrückt ist. Ist die Anzugskraft der Elektromagneteinrichtung 5 geringer als die federelastische Kraft des mindestens einen Pufferelementes 68, kann die Offenstellung auch dadurch gekennzeichnet sein, dass sich das Ventilglied 3 mit dem an der Rückseite 44 aus dem Grundkörper 54 herausragenden axialen Endabschnitt des mindestens einen Pufferelements 68 an der Grundfläche 13 abstützt, während die rückwärtige Stirnfläche des Grundkörpers 54 einen kleinen Abstand zu der Grundfläche 13 einnimmt. Dadurch wird insbesondere auch verhindert, dass der als Ankerelement fungierende Grundkörper 54 an den Polflächen 14 anhaftet.

Zweckmäßigerweise ist das Ventilglied 3 mit mehreren parallel wirkenden Pufferelementen 68 ausgestattet. Dies trifft auf das Ausführungsbeispiel zu, das über zwei Pufferelemente 68 verfügt, die auf einander diametral entgegengesetzten Seiten der Federmittel 52 mit gleichem Abstand zu den Federmitteln 52 angeordnet sind.

Jedes Pufferelement 68 ist zweckmäßigerweise in einer zu der Rückseite 44 hin offenen Aufnahmebohrung 72 aufgenommen. Diese Aufnahmebohrung 72 ist zweckmäßigerweise Bestandteil eines den Grundkörper 54 axial vollständig durchsetzenden Durchgangskanals 73, der zweckmäßigerweise in gleicher Weise gestaltet ist wie der Druckausgleichskanal 48.

Wenn in der Aufnahmebohrung 72 kein Pufferelement 68 aufgenommen ist, kann der zugeordnete Durchgangskanal 73 ebenfalls als Druckausgleichskanal 48 genutzt werden. Auch wenn in der Aufnahmebohrung 72 ein Pufferelement 68 sitzt, kann der Durchgangskanal 73 jedoch die Funktion eines Druckausgleichskanals 48 übernehmen, wenn zumindest in der Schließstellung des Ventilgliedes 3 gewährleistet ist, dass ein Druckmedium durch den Durchgangskanal 73 hindurch das darin zumindest partiell aufgenommene Pufferelement 68 axial passieren kann. Letzteres ist beispielsweise dadurch zu gewährleisten, dass der Durchgangskanal 73 im Bereich der Aufnahmeborhung 72 über eine oder mehrere Längsnuten verfügt oder dass das Pufferelement 68 rohrförmig gestaltet ist und über eine axiale Durchgangsbohrung verfügt.

Zu dem Gehäusehauptkörper 17 ist noch zu erwähnen, dass dieser zweckmäßigerweise einen mehrteiligen Aufbau hat und über einen Grundkörper 74 verfügt, in dem die beiden Ventilkanäle 28, 29 ausgebildet sind und der über eine zu der Montagefläche 22 offene Ausnehmung 75 verfügt, in die ein die Führungswand 38 bildender ringförmiger Führungskörper 76 eingesetzt ist. Die axiale Durchbrechung des ringförmigen Führungskörpers 76 bildet die Führungsausnehmung 37. Im Bereich seines radialen Außenumfanges ist der Führungskörper 76 unter Abdichtung an dem Grundkörper 74 befestigt, insbesondere durch eine Ultraschallschweißverbindung 77 oder eine Laserschweißverbindung oder eine andere stoffschlüssige Verbindung.

Rings um die Führungsausnehmung 37 herum ist zwischen dem Gehäusehauptkörper 17 und dem Steuerkopf 16 auch noch ein ringförmiges Dichtungsmittel 78 angeordnet, das ein Entweichen von Druckmedium zwischen den beiden vorgenannten Komponenten hindurch verhindert.

Der erste Ventilkanal 28 ist zweckmäßigerweise abgestuft. Er verfügt beim Ausführungsbeispiel über einen sich an den Eingang 26 anschließenden Eingangsabschnitt 28a bevorzugt kreisförmigen Durchmessers, dessen Querschnitt geringer ist als der Querschnitt eines sich axial daran anschließenden Endabschnittes 28b, zu der die Kanalmündung 32 bildet und dessen Querschnittskontur derjenigen des Ventilsitzes 33 entspricht.

## Patentansprüche

1. Elektrisch betätigbares Ventil zur Steuerung der Strömung eines fluidischen Druckmediums, mit einem relativ zu einem Ventilgehäuse (24) des Ventils (1) zu einer axialen Umschaltbewegung (4) zwischen einer Schließstellung und einer Offenstellung antreibbaren Ventilglied (3), das in der Schließstellung mit einer Vorderseite (35) an einem eine Kanalmündung (32) eines ersten Ventilkanals (28) umrahmenden ringförmigen Ventilsitz (33) dichtend anliegt und das in der Offenstellung von dem Ventilsitz (33) abgehoben ist, so dass der erste Ventilkanal (28) mit einem den Ventilsitz (33) umrahmenden, ständig mit einem zweiten Ventilkanal (29) kommunizierenden Ringraum (34) verbunden ist, wobei sich das Ventilglied (3) axial beweglich in einer von einer bezüglich des Ventilgehäuses (24) ortsfesten Führungswand (38) definierten Führungsausnehmung (37) erstreckt und wobei das Ventilglied (3) an seinem Außenumfang unter Abdichtung gleitverschieblich an der Führungswand (38) anliegt und eine axial bewegliche Begrenzungswand einer an seiner Rückseite (44) angeordneten Druckausgleichskammer (45) bildet, die zumindest in der Schließstellung des Ventilgliedes (3) durch mindestens einen Druckausgleichskanal (48) hindurch mit dem ersten Ventilkanal (28) kommuniziert, wobei der Querschnitt der Führungsausnehmung (37) dem von dem Ventilsitz (33) umschlossenen Querschnitt entspricht und das Ventilglied (3) durch Federmittel (52) in Richtung seiner Schließstellung vorgespannt ist, **dadurch gekennzeichnet, dass** das Ventilglied (3), in axialer Richtung betrachtet, eine längliche Außenkontur hat, wobei es über zwei gerade Längsseiten und zwei bogenförmig abgerundete Schmalseiten verfügt, und dass der Ventilsitz (33), in axialer Richtung betrachtet, eine längliche Gestalt hat, wobei er über zwei gerade Längsseiten (33a, 33b) und zwei bogenförmig abgerundete Schmalseiten (33c, 33d) verfügt.

2. Ventil nach Anspruch 1, **dadurch gekennzeichnet, dass** das Ventilglied (3) einen Grundkörper (54) aufweist, der ein ringförmiges Dichtungsmittel (55) trägt, das dichtend gleitverschieblich an der Führungswand (38) anliegt.

3. Ventil nach Anspruch 1 oder 2, **dadurch gekennzeichnet, dass** das ringförmige Dichtungsmittel (55) ein Lippendichtring ist, der zweckmäßigerweise in einer Ringnut (56) des Grundkörpers (54) gehalten ist.

4. Ventil nach einem der Ansprüche 1 bis 3, **dadurch gekennzeichnet, dass** der Druckausgleichskanal (48) in dem Ventilglied (3) ausgebildet ist und zweckmäßigerweise das Ventilglied (3) axial durchsetzt.

5. Ventil nach Anspruch 4, **dadurch gekennzeichnet, dass** der Druckausgleichskanal (48) querschnittsmittig in dem Ventilglied ausgebildet ist.

6. Ventil nach einem der Ansprüche 1 bis 5, **dadurch gekennzeichnet, dass** die Federmittel (52) in der Druckausgleichskammer (45) angeordnet sind.

7. Ventil nach Anspruch 6, **dadurch gekennzeichnet, dass** die Federmittel (52) seitens des Ventilgliedes (3) in eine Aufnahmebohrung (64) eintauchen, die zweckmäßigerweise zugleich Bestandteil eines Druckausgleichskanals (48) ist.

8. Ventil nach einem der Ansprüche 1 bis 7, **dadurch gekennzeichnet, dass** das Ventilglied (3) in dem in der Schließstellung am Ventilsitz (33) anliegenden Bereich ein aus Material mit gummielastischen Eigenschaften bestehendes, axial wirkendes Abdichtmittel (62) aufweist, das zweckmäßigerweise in einer in der Vorderseite (35) des Ventilgliedes (3) ausgebildeten, axial offenen Ringnut (63) aufgenommen ist.

9. Ventil nach einem der Ansprüche 1 bis 8, **dadurch gekennzeichnet, dass** der Abschnitt des Ventilgliedes (3), der auf der dem Ventilsitz (33) zugewandten Seite seines dichtend mit der Führungswand (38) zusammenwirkenden Bereiches liegt, in der Schließstellung des Ventilgliedes (3) zumindest teilweise in dem Ringraum (34) angeordnet ist.

10. Ventil nach einem der Ansprüche 1 bis 9, **dadurch gekennzeichnet, dass** das Ventilglied (3) mindestens ein gummielastisches Pufferelement (68) zur Aufpralldämpfung in der Offenstellung aufweist.

11. Ventil nach einem der Ansprüche 1 bis 10, **dadurch gekennzeichnet, dass** es als Magnetventil ausgebildet ist, das eine Elektromagneteinrichtung (5) zum direkten Antreiben des Ventilgliedes (3) aufweist.

12. Ventil nach Anspruch 11, **dadurch gekennzeichnet, dass** das Ventilglied (3) unmittelbar von einem beweglichen Ankerelement der Elektromagneteinrichtung (5) gebildet ist.

## Claims

1. Electrically actuable valve for controlling the flow of a fluidic pressure medium, with a valve member (3) which may be driven relative to a valve casing (24) of the valve (1) to an axial switchover movement (4) between a closed position and an open position and which, in the closed position, makes sealing contact with a front side (35) at an annular valve seat (33) framing a passage orifice (32) of a first valve passage (28), and which in the open position is lifted from the valve seat (33), so that the first valve passage (28) is connected with an annular space (34) framing the valve seat (33) and constantly communicating with a second valve passage (29), wherein the valve member (3) extends with axial movement facility in a guide recess (37) defined by a guide wall (38) which is stationary relative to the valve casing (24), and wherein the valve member (3) makes sliding contact with the guide wall (38) at its outer periphery and under sealing, and forms an axially movable boundary wall of a pressure compensation chamber (45) located on its rear side (44) and communicating at least in the closed position of the valve member (3) through at least one pressure compensation passage (48) with the first valve passage (28), wherein the cross-section of the guide recess (37) corresponds to the cross-section encompassed by the valve seat (33), and the valve member (3) is biased by spring means (52) in the direction of its closed position, **characterised in that** the valve member (3), viewed in the axial direction, has an elongated external contour, wherein it has two straight long sides and two bow-shaped, rounded narrow sides, and that the valve seat (33), viewed in the axial direction, has an elongated shape, wherein it has two straight long sides (33a, 33b) and two bow-shaped, rounded narrow sides (33c, 33d).

2. Valve according to claim 1, **characterised in that** the valve member (3) has a base body (54) carrying annular sealing means (55) which are able to slide with sealing on the guide wall (38).

3. Valve according to claim 1 or 2, **characterised in that** the annular sealing means (55) comprise a lip seal ring, held expediently in an annular slot (56) of the base body (54).

4. Valve according to any of claims 1 to 3, **characterised in that** the pressure compensation passage (48) is formed in the valve member (3) and expediently passes axially through the valve member (3).

5. Valve according to claim 4, **characterised in that** the pressure compensation passage (48) is formed in the centre of the cross-section of the valve member.

6. Valve according to any of claims 1 to 5, **characterised in that** the spring means (52) are located in the pressure compensation chamber (45).

7. Valve according to claim 6, **characterised in that** the spring means (52) at the side of the valve member (3) dip into a locating bore (64) which is expediently at the same time part of a pressure compensation passage (48).

8. Valve according to any of claims 1 to 7, **characterised in that** the valve member (3) has, in the area adjacent to the valve seat (33) in the closed position, an axially acting sealing means (62) made of material with rubber-elastic properties, which is held expediently in an axially open annular slot (63) formed in the front side (35) of the valve member (3).

9. Valve according to any of claims 1 to 8, **characterised in that** the section of the valve member (3) which lies on the side facing the valve seat (33) of its area which seals in conjunction with the guide wall (38), is located at least partly in the annular space (34) in the closed position of the valve member (3).

10. Valve according to any of claims 1 to 9, **characterised in that** the valve member (3) has at least one rubber-elastic buffer element (68) for impact damping in the open position.

11. Valve according to any of claims 1 to 10, **characterised in that** it is designed as a solenoid valve which has an electromagnetic device (5) for direct driving of the valve member (3).

12. Valve according to claim 11, **characterised in that** the valve member (3) is formed directly by a movable armature element of the electromagnetic device (5).

## Revendications

1. Soupape à actionnement électrique servant à commander l'écoulement d'un milieu fluide sous pression, comprenant un organe de soupape (3) pouvant être amené par entraînement à effectuer un mouvement de commutation (4) axial entre une position de fermeture et une position d'ouverture par rapport à un carter de soupape (24) de la soupape (1), lequel organe de soupape repose de manière à assurer l'étanchéité dans la position de fermeture, par un côté avant (35), au niveau d'un siège de soupape (33) de forme annulaire encadrant une embouchure de canal (32) d'un premier canal de soupape (28) et est relevé par le siège de soupape (33) dans la position d'ouverture de sorte que le premier canal de soupape (28) est relié à un espace annulaire (34) encadrant le siège de soupape (33), se trouvant en communication permanente avec un deuxième canal de soupape (29), sachant que l'organe de soupape (3) s'étend de manière mobile axialement dans un évidement de guidage (37) défini par une paroi de guidage (38) immobile par rapport au carter de soupape (24) et sachant que l'organe de soupape (3) repose, au niveau de sa périphérie extérieure, en assurant l'étanchéité, de manière à pouvoir se déplacer par coulissement au niveau de la paroi de guidage (38), et forme une paroi de délimitation mobile axialement d'une chambre d'équilibrage de pression (45) disposée au niveau de son côté arrière (44), laquelle communique, au moins dans la position de fermeture de l'organe de soupape (3), à travers au moins un canal d'équilibrage de pression (48), avec le premier canal de soupape (28), sachant que la coupe transversale de l'évidement de guidage (37) correspond à la coupe transversale entourée par le siège de soupape (33) et que l'organe de soupape (3) est précontraint en direction de sa position de fermeture par des moyens formant ressort (52), **caractérisée en ce que** l'organe de soupape (3), vu dans le sens axial, présente un contour extérieur allongé, sachant qu'il dispose de deux côtés longitudinaux rectilignes et de deux tranches arrondies de forme cintrée, et **en ce que** le siège de soupape (33), vu dans le sens axial, présente une forme allongée, sachant qu'il dispose de deux côtés longitudinaux (33a, 33b) rectilignes et de deux tranches (33c, 33d) arrondies de forme cintrée.

2. Soupape selon la revendication 1, **caractérisée en ce que** l'organe de soupape (3) présente un corps de base (54), qui supporte un moyen d'étanchéité (55) de forme annulaire, qui repose, en assurant l'étanchéité, de manière à pouvoir se déplacer par coulissement au niveau de la paroi de guidage (38).

3. Soupape selon la revendication 1 ou 2, **caractérisée en ce que** le moyen d'étanchéité (55) de forme annulaire est une bague d'étanchéité à lèvres, qui est maintenue de manière appropriée dans une rainure annulaire (56) du corps de base (54).

4. Soupape selon l'une quelconque des revendications 1 à 3, **caractérisée en ce que** le canal d'équilibrage de pression (48) est réalisé dans l'organe de soupape (3) et traverse de manière appropriée l'organe de soupape (3) axialement.

5. Soupape selon la revendication 4, **caractérisée en ce que** le canal d'équilibrage de pression (48) est réalisé au centre de la section transversale dans l'organe de soupape.

6. Soupape selon l'une quelconque des revendications 1 à 5, **caractérisée en ce que** les moyens formant ressort (52) sont disposés dans la chambre d'équilibrage de pression (45).

7. Soupape selon la revendication 6, **caractérisée en ce que** les moyens formant ressort (52) s'enfoncent dans un alésage de logement (64) du côté de l'organe de soupape (3), lequel fait dans le même temps, de manière appropriée, partie intégrante d'un canal d'équilibrage de pression (48).

8. Soupape selon l'une quelconque des revendications 1 à 7, **caractérisée en ce que** l'organe de soupape (3) présente, dans la zone reposant au niveau du siège de soupape (33) dans la position de fermeture, un moyen d'étanchéité (62) constitué d'un matériau présentant des propriétés élastiques, agissant axialement, lequel est logé, de manière appropriée, dans une rainure annulaire (63) réalisée dans le côté avant (35) de l'organe de soupape (3), ouverte axialement.

9. Soupape selon l'une quelconque des revendications 1 à 8, **caractérisée en ce que** la section de l'organe de soupape (3), qui se trouve sur le côté, tourné vers le siège de soupape (33), de sa zone coopérant, de manière à assurer l'étanchéité, avec la paroi de guidage (38), est disposée au moins en partie dans l'espace annulaire (34) dans la position de fermeture de l'organe de soupape (3).

10. Soupape selon l'une quelconque des revendications 1 à 9, **caractérisée en ce que** l'organe de soupape (3) présente au moins un élément amortisseur (68) élastique servant à amortir les chocs dans la position d'ouverture.

11. Soupape selon l'une quelconque des revendications 1 à 10, **caractérisée en ce qu'**elle est réalisée sous la forme d'une soupape électromagnétique, qui présente un dispositif électromagnétique (5) servant à entraîner directement l'organe de soupape (3).

12. Soupape selon la revendication 11, **caractérisée en ce que** l'organe de soupape (3) est formé directement par un élément d'ancrage mobile du dispositif électromagnétique (5).
